# FASCICULE DE BREVET EUROPEEN

(11) **EP 0 744 317 B1**
(45) Date de publication et mention de la délivrance du brevet: **08.03.2000**
(21) Numéro de dépôt: 96440042.8
(22) Date de dépôt: 13.05.1996
(51) Int. Cl.: B60Q 1/30

(54) **Machine agricole avec un panneau de signalisation perfectionné**
Landwirtschaftliche Maschine mit einer Warntafel
Agricultural machine with a warning plate

(30) Priorité: 23.05.1995 FR 9506339
(43) Date de publication de la demande: 27.11.1996
(73) Titulaire: KUHN S.A., F-67700 Saverne (FR)
(72) Inventeur: Walter, René, 57620 Goetzenbruck (FR)

(56) Documents cités:
- BE-A- 900 017
- US-A- 4 930 834

## Description

La présente invention concerne une machine agricole comportant des organes de travail et un dispositif constitué d'une toile de protection en matière souple, entourant au moins partiellement lesdits organes de travail, ainsi qu'un panneau de signalisation.

On connaît une telle machine agricole réalisée sous forme de faucheuse telle que décrite dans la demande de brevet français FR-94 13106 (EP-0709018) de notre demanderesse.

Cette faucheuse comporte dans les grandes lignes un mécanisme de coupe, une structure d'attelage et une poutre porteuse liant le mécanisme de coupe à la structure d'attelage. La poutre porteuse est liée à la structure d'attelage, au moyen d'une articulation du type pivot d'axe longitudinal vertical, de manière à permettre à la poutre porteuse de pivoter vers l'arrière pour escamoter le mécanisme de coupe longitudinalement suivant la direction d'avance au transport. En position de travail, le mécanisme de coupe s'étend transversalement à la direction d'avance au travail.

Le mécanisme de coupe comporte des organes de travail qui sont, selon cet exemple représenté, des disques, lesquels sont entourés par une toile de protection. Sur l'extrémité éloignée du mécanisme de coupe est situé un panneau de signalisation pouvant occuper deux positions : une position opérationnelle, dans laquelle il s'étend verticalement à l'extrémité arrière du mécanisme de coupe lorsque celui-ci est en position de transport, et une position non opérationnelle, dans laquelle le panneau de signalisation s'étend au-dessus du mécanisme de coupe lorsque celui-ci est en position de travail. La mise en position opérationnelle, respectivement en position non opérationnelle du panneau de signalisation, se fait automatiquement lorsque le mécanisme de coupe est amené dans sa position de transport, respectivement dans sa position de travail. A cet effet, il est prévu un mécanisme de tringlerie qui fait pivoter le panneau de signalisation d'une position dans l'autre au moyen d'une articulation du type pivot liant ledit panneau au mécanisme de coupe.

Le but de la présente invention est de concevoir un panneau de signalisation peu cher, qui ne gêne pas le travail de la machine agricole et qui respecte les normes adéquates.

A cet effet, la présente invention est caractérisée en ce que le panneau de signalisation fait partie intégrante de la toile de protection. Une telle conception permet de supprimer tout le mécanisme de tringlerie et de simplifier considérablement le panneau de signalisation, tout en respectant les normes correspondantes, sans pour autant gêner le travail de la machine agricole.

Dans la machine agricole selon la présente invention, il est du reste prévu que la toile comporte une poche dans laquelle est logé le support.

Cette poche pourra en sus être avantageusement prévue sur la partie extérieure de la toile de manière à faciliter la mise en place et l'accès du support.

En sus, la poche présente avantageusement une ouverture permettant d'engager le support dans ladite poche.

Avantageusement, cette ouverture est prévue au niveau du bord supérieur de la poche.

Il pourra en sus être avantageusement prévu que l'ouverture de la poche peut être obturée de manière à emprisonner le support et d'éviter que celui-ci ne s'échappe de la poche sous l'action des vibrations et des secousses de la machine agricole.

Selon une autre caractéristique supplémentaire de l'invention, la surface extérieure de la poche est constituée de la même matière que la toile.

Selon une autre caractéristique supplémentaire de l'invention, la surface extérieure de la poche est transparente, la pellicule de signalisation adhésive étant collée sur la face du support visible à travers ladite surface extérieure transparente.

Selon une autre caractéristique de l'invention, une pellicule de signalisation adhésive est collée sur la surface extérieure de la poche, au moins sensiblement au niveau du support, de manière à maintenir, au moins sensiblement, ladite pellicule dans un plan.

Il pourra également être prévu que le panneau de signalisation soit fixé sur la toile de protection.

A cet effet, le panneau de signalisation comporte un support présentant une certaine rigidité, telle que l'exige les normes, et une pellicule de signalisation adhésive, ce support étant lié à la toile, tandis que cette pellicule de signalisation est collée sur le support.

Selon une autre caractéristique supplémentaire de l'invention, il pourra également être prévu un moyen de protection destiné à protéger la pellicule de signalisation adhésive ou la surface extérieure transparente de la poche.

Ce moyen de protection comporte avantageusement au moins un renforcement faisant saillie devant la pellicule de signalisation adhésive ou la surface extérieure transparente de la poche lorsque la machine agricole se trouve en position de travail.

Dans ce cas le renforcement est avantageusement constitué par un pliage de la surface extérieure de la poche, lequel est destiné à repousser les éléments extérieurs, afin d'éviter qu'ils ne rentrent en collision avec la pellicule de signalisation adhésive ce qui pourrait l'endommager.

Avantageusement, la machine agricole selon l'invention est une faucheuse dont les organes de travail sont constitués par un mécanisme de récolte.

Il pourra en sus être avantageusement prévu que le mécanisme de récolte est pivoté, pour le transport, autour d'un axe de pivotement au moins sensiblement vertical de sorte à s'étendre longitudinalement suivant la direction d'avance.

D'autres caractéristiques et avantages de la présente invention ressortent de la description suivante d'un exemple d'application et de deux exemples de réalisation non limitatifs faites en référence aux dessins annexés sur lesquels :
- la figure 1 représente une vue de dessus, sur laquelle ont été effectuées différentes coupes partielles, d'une faucheuse placée en position de transport.
- La figure 2 représente une vue arrière de la faucheuse placée en position de travail.
- La figure 3 représente, à une échelle agrandie, suivant la flèche III, représentée sur la figure 1, une vue de face d'un panneau de signalisation équipant la faucheuse selon une première forme de réalisation.
- La figure 4 représente, à une échelle agrandie, une coupe par le plan IV-IV défini sur la figure 3.
- La figure 5 représente une vue de face d'un panneau de signalisation équipant la faucheuse, selon une deuxième forme de réalisation.
- La figure 6 représente, à une échelle agrandie, une coupe par le plan VI-VI défini sur la figure 5.

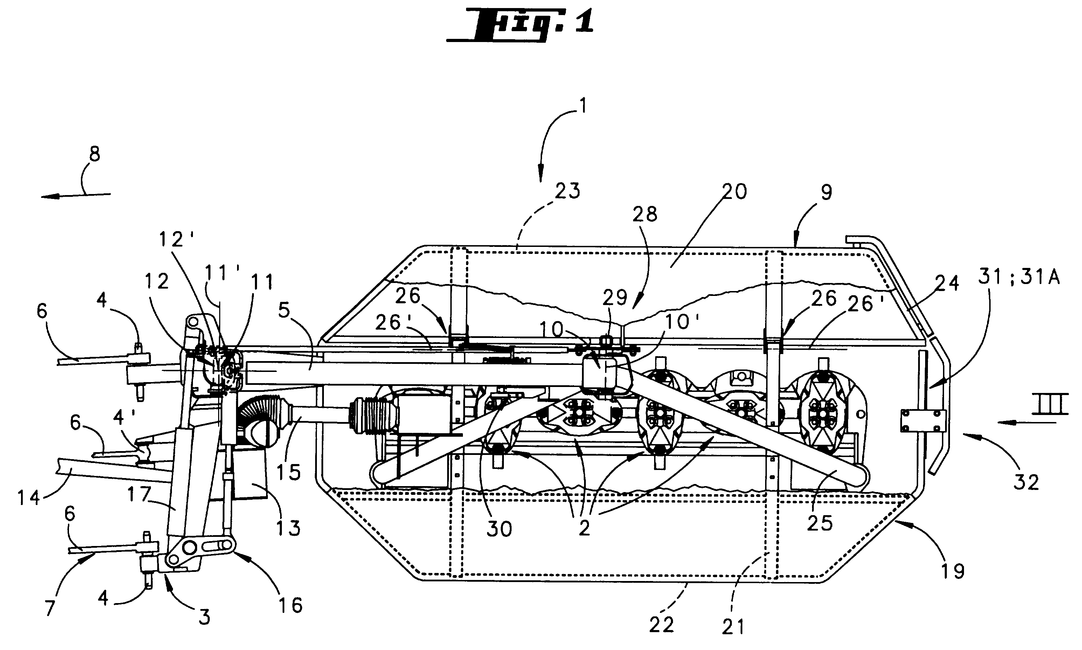

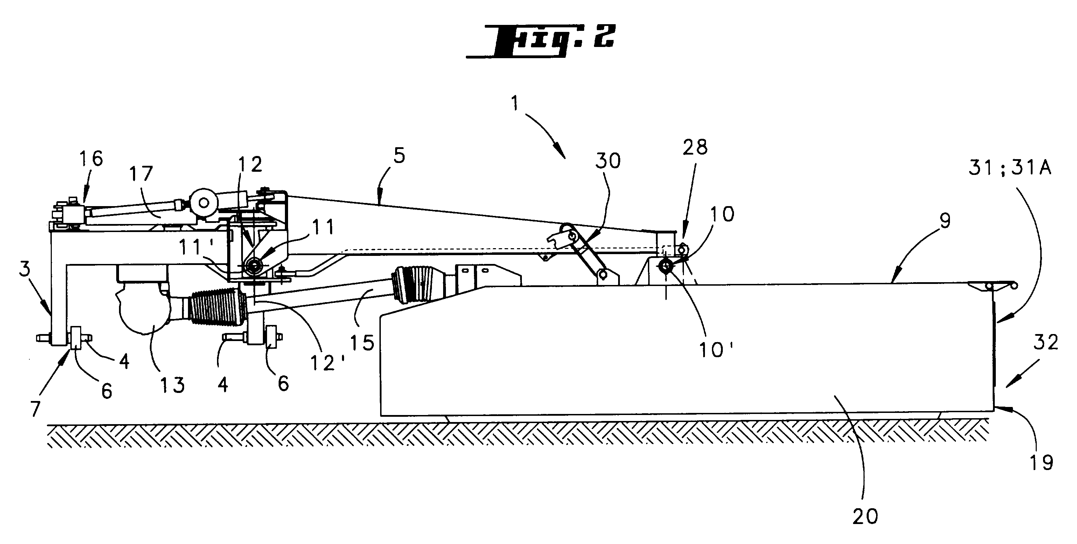

La faucheuse (1), telle que représentée sur les figures 1 et 2, est semblable à celle décrite dans la demande de brevet français N° 94 13106 présentée auparavant. Pour de plus amples détails, on se reportera, en cas de besoin, au texte de ladite demande de brevet.

La faucheuse (1) telle que représentée sur la figure 1 comporte des organes de travail (2), une structure d'attelage (3) à trois points d'attelage (4, 4') et une poutre porteuse (5) liant les organes de travail (2) à la structure d'attelage (3). Au transport, ainsi qu'au travail, la faucheuse (1) est attelée, au moyen de la structure d'attelage (3), au dispositif de levage (6) à trois points d'un véhicule moteur (7), (seul le dispositif de levage (6) de celui-ci a été représenté).

En position de travail (figure 2), la faucheuse (1) s'étend latéralement à côté de la voie du véhicule moteur (7) et transversalement à la direction d'avance (8).

En position de transport, tel que représenté sur la figure 1, la faucheuse (1) s'étend derrière le véhicule moteur (7), longitudinalement suivant la direction d'avance (8).

Les organes de travail (2) font partie, selon cet exemple représenté, d'un mécanisme de récolte (9) qui ne sera pas décrit plus en détail : il peut en effet s'agir de n'importe quel type de mécanisme de récolte.

Ce mécanisme de récolte (9) est lié à la poutre porteuse (5) au moyen d'une première articulation (10) d'axe longitudinal (10') s'étendant à la partie supérieure du mécanisme de récolte (9) et permettant à ce dernier de pivoter d'un certain angle par rapport à la poutre porteuse (5).

La poutre porteuse (5), quant à elle, est liée à la structure d'attelage (3) au moyen d'une deuxième articulation (11) d'axe longitudinal (11') dirigé vers l'avant lorsque le mécanisme de récolte (9) est en position de travail et, d'une troisième articulation (12) d'axe longitudinal (12') au moins sensiblement vertical.

Les articulations (10 et 11) permettent au mécanisme de récolte (9) de suivre le relief du sol lors de la coupe, tandis que l'articulation (12) permet de pivoter le mécanisme de récolte (9) autour de l'axe longitudinal (12') dans la position de transport.

L'animation des organes de travail (2) est réalisée par une source motrice qui est, dans l'exemple représenté, constituée par la prise de force (non représentée) du véhicule moteur (7). Toute autre source motrice est cependant envisageable. Celle-ci transmet le mouvement à un carter de renvoi (13) au moyen d'un premier arbre de transmission télescopique (14) à joints universels. Le carter de renvoi (13) est fixé sur la structure d'attelage (3) et s'étend, en vue suivant la direction d'avance (8), entre les deux points d'attelage inférieurs (4) de ladite structure d'attelage (3). Ce carter de renvoi (13) transmet lui-même le mouvement aux organes de travail (2) au moyen d'un deuxième arbre de transmission télescopique (15) à joints universels qui s'étend transversalement à la direction d'avance (8) lorsque le mécanisme de récolte (9) est en position de travail. Il apparaît par ailleurs que l'articulation (11) et l'articulation (12) s'étendent dans le voisinage et quelque peu plus haut que le joint universel de l'arbre de transmission télescopique (15) situé du côté du carter de renvoi (13).

La faucheuse (1) comporte aussi un dispositif (16) de sécurité. Celui-ci maintient le mécanisme de récolte (9) dans sa position de travail, mais autorise le pivotement de ce dernier, conjointement avec la poutre porteuse (5), vers l'arrière autour de l'axe (12') de l'articulation (12) au cas où le mécanisme de récolte (9) heurtait pendant le travail un obstacle se trouvant dans le champ.

Ce dispositif (16) de sécurité ne sera pas décrit dans le détail ; en cas de besoin on se reportera à la description qui en est donnée dans la demande de brevet français FR 94 05429.

Il convient simplement d'indiquer que ce dispositif (16) de sécurité comporte un organe de manoeuvre (17) destiné entre autre à pivoter le mécanisme de récolte (9), conjointement avec la poutre porteuse (5), vers l'arrière jusque dans la position de transport représentée sur la figure 1. Dans cette position, le mécanisme de récolte (9) et la poutre porteuse (5) se trouvent derrière le véhicule moteur (7) dans le prolongement de celui-ci. Dans cette position, on remarque par ailleurs que l'arbre de transmission télescopique (15) à joints universels s'étend essentiellement suivant la direction (8) de déplacement au transport et que son joint universel situé du côté du carter de renvoi (13) présente un angle tellement important que l'arbre de transmission (15) est incapable de transmettre le mouvement aux organes de travail (2) du mécanisme de récolte (9).

Dans l'exemple représenté, l'organe de manoeuvre (17) est constitué d'un vérin hydraulique double effet dont l'animation peut être assurée par une source hydraulique (non représentée) telle que la centrale hydraulique du véhicule moteur (7) par exemple.

Cette faucheuse (1) comporte également un dispositif (19) composé d'une toile de protection (20) en matière souple entourant au moins partiellement les organes de travail (2). Ce dispositif (19) est destiné à éviter des accidents corporels en interdisant l'accès inopiné aux organes de travail (2) et, selon la nature des organes de travail (2), en empêchant la projection d'objets tels que des pierres par exemple.

Selon l'exemple représenté, la toile de protection (20) est tendue et fixée sur une ossature (21), laquelle comporte une partie arrière (22) fixe et une partie avant (23) mobile.

La partie avant mobile (23) est réalisée sous forme de volet (24) qui est lié indirectement à un organe porteur (25) à l'aide d'une quatrième articulation (26) dont l'axe de pivotement (26') s'étend au moins sensiblement horizontalement et au moins sensiblement orthogonalement à la direction d'avance (8) lorsque le mécanisme de récolte (9) est en position de travail. La partie avant (23) de l'ossature (21) peut ainsi être pivotée vers le haut autour de l'axe de pivotement (26'), pour accéder aisément notamment aux organes de travail (2) du mécanisme de récolte (9) en vue du contrôle de leur état et, le cas échéant, de leur remplacement. Dans le voisinage de la première articulation (10) liant le mécanisme de récolte (9) à la poutre porteuse (5), est prévue une butée (28) s'étendant dans le voisinage d'un organe d'appui (29) appartenant au volet (24), de manière que celui-ci ne peut pas être pivoté vers le haut autour de l'axe de pivotement (26') lorsque le mécanisme de récolte (9) se trouve en position de travail. Le pivotement du volet (24) vers le haut n'est possible que lorsque le mécanisme de récolte (9) se trouve en position de transport.

Comme expliqué précédemment, le mécanisme de récolte (9) peut, en position de travail, pivoter par rapport à la poutre porteuse (5) autour de l'axe de pivotement (10'). Ce pivotement est toutefois limité par un organe de limitation (30) agissant entre la poutre porteuse (5) et le mécanisme de récolte (9).

Le fonctionnement de la butée (28) et de l'organe de limitation (30) est décrit plus en détail dans la demande de brevet français N° 94 13106.

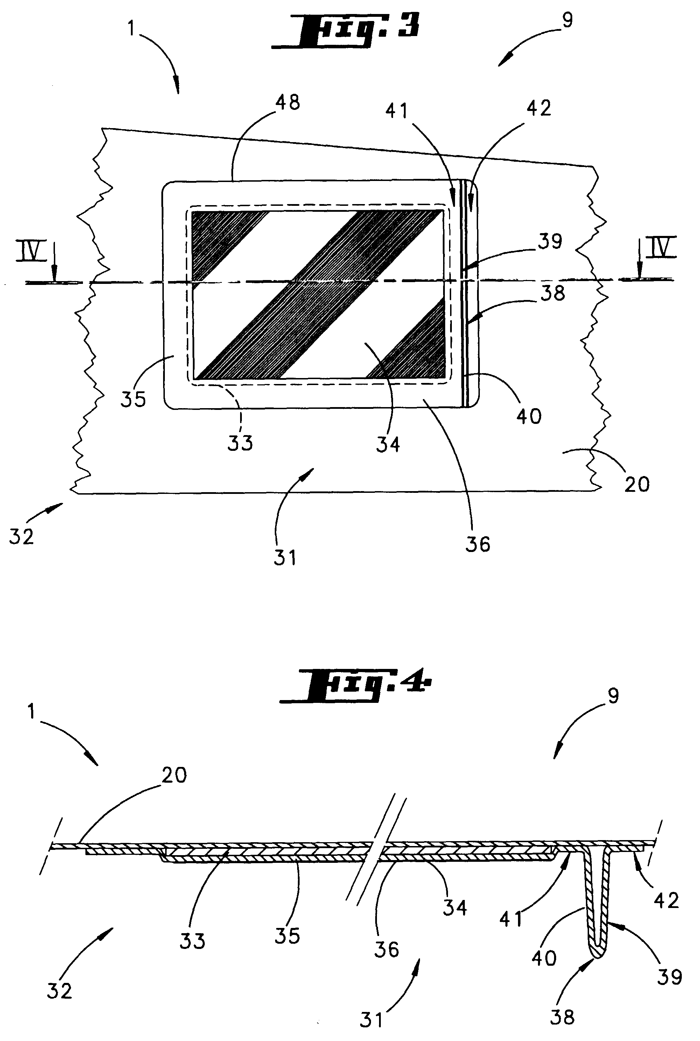

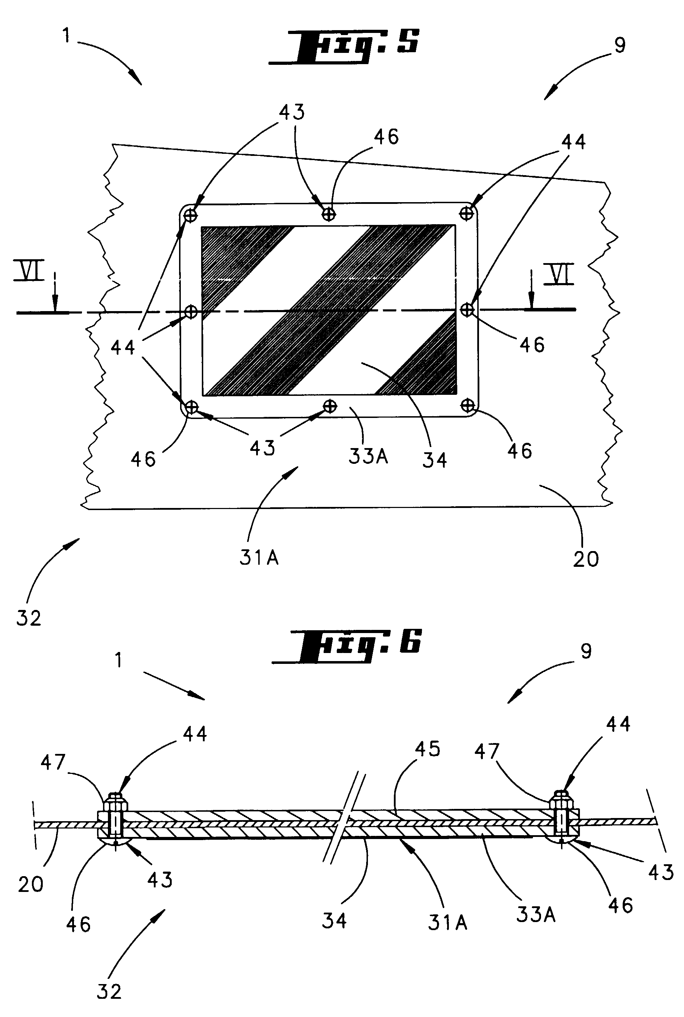

A la lumière des figures 3 et 4, on voit que le mécanisme de récolte (9) de la faucheuse (1) est en sus doté d'un panneau de signalisation (31) situé sur la partie arrière (32) du mécanisme de récolte (9) lorsque celui-ci se trouve en position de transport.

Selon cette première forme de réalisation, le panneau de signalisation (31) est de forme rectangulaire, et fait partie intégrante de la toile de protection (20). Il comporte un support (33) présentant une certaine rigidité et une pellicule de signalisation (34) adhésive. Le support (33) est composé d'une matière plastique relativement rigide, et est logé dans une poche (35) prévue sur la toile (20).

Cette poche (35), dont la surface extérieure (36) est constituée de la même matière que la toile (20), est soudée, sur toute sa périphérie, sur la partie extérieure de la toile (20) emprisonnant ainsi le support (33). La pellicule de signalisation (34), quant à elle, est collée sur la surface extérieure (36) de la poche (35) au moins sensiblement au niveau du support (33).

De surcroît, il est prévu un moyen de protection (38) destiné à protéger la pellicule de signalisation (34) adhésive. Ce moyen de protection (38) comporte un renforcement (39) faisant saillie devant la pellicule de signalisation (34) adhésive lorsque la faucheuse se trouve en position de travail. Ce renforcement (39) est constitué par un pliage (40) de la surface extérieure (36) de la poche (35).

Selon l'exemple représenté, ce renforcement (39) est constitué plus précisément par un pliage (40) de la poche (35).

Ce pliage (40) de la poche (35) est maintenu en position au moyen de deux cordons de soudure (41, 42) situés de part et d'autre dudit pliage (40) et s'étendant au moins sensiblement parallèlement à ce dernier. L'un (41) des cordons de soudure (41, 42) fait partie de la soudure qui fixe la poche (35) sur la toile (20) tandis que l'autre (42) est situé de l'autre côté du pliage (40).

Les figures 5 et 6 montrent une deuxième forme de réalisation d'un panneau de signalisation selon la présente idée inventive. Ce panneau de signalisation (31A) comporte un certain nombre d'éléments qui ont été décrits précédemment. Ces éléments garderont par conséquent le même numéro de repère et ne seront pas redécrits. Il comporte également un certain nombre d'éléments qui sont comparables à des éléments du panneau de signalisation (31). Ces éléments seront affectés du même numéro de repère que ces éléments comparables du panneau de signalisation (31) suivi de la lettre A. Ils ne seront décrits que si cela s'avère nécessaire.

Ce panneau de signalisation (31A) selon cette deuxième forme de réalisation est destiné à équiper la faucheuse (1) décrite ci-avant.

Ce panneau de signalisation (31A) est situé sur la partie arrière (32) du mécanisme de récolte (9) lorsque celui-ci se trouve en position de transport.

Selon cette deuxième forme de réalisation, le panneau de signalisation est fixé sur la toile (20).

A cet effet, le panneau de signalisation (31A) comporte une pellicule de signalisation (34) adhésive collée sur un support (33A) en matière plastique. Ce support (33A) présente une certaine rigidité et est fixé sur la partie extérieure de la toile (20) au moyen d'éléments de fixation (43) qui sont, selon l'exemple représenté, des boulons (44) répartis au moins sensiblement régulièrement sur la périphérie dudit support (33A). A cet effet, il est prévu un support complémentaire (45) situé en regard du support (33A) de l'autre côté de la toile de protection (20) sur sa partie intérieure de manière à obtenir un appui au moins sensiblement homogène du support (33A) sur la toile (20) pour ne pas esquinter cette dernière. Pour une question de poids, le support complémentaire peut être de forme rectangulaire-annulaire de manière à obtenir un appui du support (33A) au moins aux alentours de la périphérie dudit support (33A).

Chaque boulon (44) est composé d'une vis (46) à tête cylindrique fendue et d'un écrou (47). Chaque vis (46) traverse de part en part le support (33A), la toile (20) et le support complémentaire (45) au moyen de trous prévus à cet effet dans les différents éléments.

On remarquera que les têtes des vis (46) sont en sus de forme bombée et situées à l'extérieur de la toile (20) afin d'éviter de créer des zones d'accrochage du fourrage.

Diverses modifications peuvent être apportées à l'exemple qui vient d'être décrit, notamment en ce qui concerne la constitution des divers éléments ou par substitution d'équivalents techniques, sans pour autant sortir du domaine de protection de la présente invention comme définie par les revendications ci-jointes.

Ainsi, on comprendra que l'objet de la présente invention peut s'appliquer à une machine agricole différente que celle décrite précédemment.

Selon une autre forme de réalisation supplémentaire de l'invention, il est parfaitement possible de réaliser une ouverture dans la poche (35) permettant d'engager le support (33) dans ladite poche. Cette ouverture peut être prévue au niveau du bord supérieur (48) de la poche (35). Une fois le support (33) engagé dans la poche (35), il peut être prévu que l'ouverture de la poche soit obturée au moyen d'une fermeture, afin d'éviter que le support (33) se glisse en dehors de ladite poche (35). Selon cette forme de réalisation, la surface extérieure (36) de la poche (35) peut être transparente et la pellicule de signalisation (34) adhésive peut être collée directement sur la face du support (33) visible à travers ladite surface extérieure (36) transparente.

Il est encore parfaitement concevable que le renforcement (39) fasse saillie sur tout le pourtour de la pellicule de signalisation (34) de manière à protéger davantage cette dernière.

On comprendra également que la poche (35) ou le support (33A) peut être fixé sur la toile de protection (20) par des moyens autres que ceux décrits précédemment, comme par exemple par collage, rivetage, etc...

Enfin, le panneau de signalisation (31 ; 31A) peut être de forme différente que celle représentée pour répondre aux exigences de la législation applicable.

## Revendications

1. Machine agricole comportant **des organes de travail (2) et** un dispositif (19) constitué d'une toile de protection (20) en matière souple, **entourant au moins partiellement lesdits organes de travail (2)**, et d'un panneau de signalisation (31), caractérisée en ce que ledit panneau de signalisation (31) fait partie intégrante de la toile de protection (20).

2. Machine agricole selon la revendication 1, caractérisée en ce que la toile de protection (20) comporte une poche (35), **ayant une surface extérieure (36)**, dans laquelle est logé un support (33).

3. Machine agricole selon la revendication 2, caractérisée en ce que la poche (35) est prévue sur la partie extérieure de la toile de protection (20).

4. Machine agricole selon la revendication 2 ou 3, caractérisée en ce que la poche (35) présente une ouverture permettant d'engager le support (33) dans la poche (35).

5. Machine agricole selon la revendication 4, caractérisée en ce que l'ouverture de la poche (35) est prévue au niveau du bord supérieur (48) de cette dernière.

6. Machine agricole selon la revendication 4 ou 5, caractérisée en ce que l'ouverture de la poche (35) peut être obturée.

7. Machine agricole selon l'une quelconque des revendications 2 à 6, caractérisée en ce que la surface extérieure (36) de la poche (35) est constituée de la même matière que la toile de protection (20).

8. Machine agricole selon l'une quelconque des revendications 2 à 6, caractérisée en ce que la surface extérieure (36) de la poche (35) est transparente une pellicule de signalisation (34) adhésive étant collée sur la face du support (33) visible à travers ladite surface extérieure (36) transparente.

9. Machine agricole selon l'une quelconque des revendications 2 à 7, *caractérisée en ce* que une pellicule de signalisation adhésive (34) est collée sur la surface extérieure (36) de la poche (35) au moins sensiblement au niveau du support (33).

10. Machine agricole comportant **des organes de travail (2) et** un dispositif (19) constitué d'une toile de protection (20) en matière souple, **entourant au moins partiellement lesdits organes de travail (2)**, et d'un panneau de signalisation (31A), caractérisée en ce que ledit panneau de signalisation (31A) est fixé sur ladite toile de protection (20).

11. Machine agricole selon la revendication 10, caractérisée en ce que le panneau de signalisation (31A) comporte un support (33A) présentant une certaine rigidité et une pellicule de signalisation adhésive (34), ce support (33A) étant lié à la toile de protection (20), tandis que cette pellicule de signalisation (34) est collée sur le support (33A).

12. Machine agricole selon l'une quelconque des revendications 8, 9 ou 11, caractérisée en ce qu'il est prévu un moyen de protection (38) destiné à protéger la pellicule de signalisation adhésive (34) ou la surface extérieure (36) transparente de la poche (35).

13. Machine agricole selon la revendication 12, caractérisée en ce que le moyen de protection (38) comporte au moins un renforcement (39) faisant saillie devant la pellicule de signalisation adhésive (34) ou la surface extérieure (36) transparente de la poche (35), lorsque la machine agricole se trouve en position de travail.

14. Machine agricole selon la revendication 13, caractérisée en ce que le renforcement (39) est constitué par un pliage (40) de la surface extérieure (36) de la poche (35).

15. Machine agricole selon l'**une quelconque des revendications 1 à 14**, caractérisée en ce que c'est une faucheuse dont les organes de travail (2) sont constitués par un mécanisme de récolte (9).

16. Machine agricole selon la revendication 15, caractérisée en ce que le mécanisme de récolte (9) est pivoté, pour le transport, autour d'un axe de pivotement (12') au moins sensiblement vertical, de sorte à s'étendre longitudinalement suivant la direction d'avance (8).

## Patentansprüche

1. Landwirtschaftliche Maschine mit Arbeitselementen (2) und einer aus einer Schutzabdeckung (20) aus flexiblem Material, die die Arbeitselemente (2) zumindest teilweise umgibt, und einer Warntafel (31) gebildeten Vorrichtung (19), ***dadurch gekennzeichnet,*** daß die Warntafel (31) einen integralen Teil der Schutzabdeckung (20) bildet.

2. Landwirtschaftliche Maschine nach Anspruch 1, ***dadurch gekennzeichnet,*** daß die Schutzabdeckung (20) eine Tasche (35) mit einer Außenfläche (36) aufweist, in der eine Stütze (33) untergebracht ist.

3. Landwirtschaftliche Maschine nach Anspruch 2, ***dadurch gekennzeichnet,*** daß die Tasche (35) am Außenteil der Schutzabdeckung (20) vorgesehen ist.

4. Landwirtschaftliche Maschine nach Anspruch 2 oder 3, ***dadurch gekennzeichnet,*** daß die Tasche (35) eine Öffnung aufweist, die ein Einsetzen der Stütze (33) in die Tasche (35) gestattet.

5. Landwirtschaftliche Maschine nach Anspruch 4, ***dadurch gekennzeichnet,*** daß die Öffnung der Tasche (35) am oberen Rand (48) der letzteren vorgesehen ist.

6. Landwirtschaftliche Maschine nach Anspruch 4 oder 5, ***dadurch gekennzeichnet,*** daß die Öffnung der Tasche (35) verschlossen werden kann.

7. Landwirtschaftliche Maschine nach irgend einem der Ansprüche 2 bis 6, ***dadurch gekennzeichnet,*** daß die Außenfläche (36) der Tasche (35) aus dem gleichen Material besteht wie die Schutzabdeckung (20).

8. Landwirtschaftliche Maschine nach irgend einem der Ansprüche 2 bis 6, ***dadurch gekennzeichnet,*** daß die Außenfläche (36) der Tasche (35) durchsichtig ist, wobei eine Warnhaftfolie (34) auf die durch die durchsichtige Außenfläche (36) sichtbare Fläche der Stütze (33) geklebt ist.

9. Landwirtschaftliche Maschine nach irgend einem der Ansprüche 2 bis 7, ***dadurch gekennzeichnet,*** daß eine Warnhaftfolie (34) zumindest im wesentlichen in Höhe der Stütze (33) auf die Außenfläche (36) der Tasche (35) geklebt ist.

10. Landwirtschaftliche Maschine mit Arbeitselementen (2) und einer aus einer Schutzabdeckung (20) aus flexiblem Material, die die Arbeitselemente (2) zumindest teilweise umgibt, und einer Warntafel (31A) gebildeten Vorrichtung (19), ***dadurch gekennzeichnet,*** daß die Warntafel (31A) an der Schutzabdeckung (20) befestigt ist.

11. Landwirtschaftliche Maschine nach Anspruch 10, ***dadurch gekennzeichnet,*** daß die Warntafel (31A) eine Stütze (33A), die eine gewisse Steifigkeit aufweist, und eine Warnhaftfolie (34) aufweist, wobei diese Stütze (33A) mit der Schutzabdeckung (20) verbunden ist, während diese Warnfolie (34) auf die Stütze (33A) geklebt ist.

12. Landwirtschaftliche Maschine nach irgend einem der Ansprüche 8, 9 oder 11, ***dadurch gekennzeichnet,*** daß ein Schutzmittel (38) vorgesehen ist, das die Warnhaftfolie (34) oder die durchsichtige Außenfläche (36) der Tasche (35) schützen soll.

13. Landwirtschaftliche Maschine nach Anspruch 12, ***dadurch gekennzeichnet,*** daß das Schutzmittel (38) mindestens eine Verstärkung (39) aufweist, die vor der Warnhaftfolie (34) oder der durchsichtigen Außenfläche (36) der Tasche (35) vorragt, wenn sich die landwirtschaftliche Maschine in Arbeitsstellung befindet.

14. Landwirtschaftliche Maschine nach Anspruch 13, ***dadurch gekennzeichnet,*** daß die Verstärkung (39) durch eine Faltung (40) der Außenfläche (36) der Tasche (35) gebildet wird.

15. Landwirtschaftliche Maschine nach irgend einem der Ansprüchc 1 bis 14, ***dadurch gekennzeichnet,*** daß es sich um eine Mähmaschine handelt, deren Arbeitselemente (2) durch einen Erntemechanismus (9) gebildet werden.

16. Landwirtschaftliche Maschine nach Anspruch 15, ***dadurch gekennzeichnet,*** daß der Erntemechanismus (9) zum Transport um eine zumindest im wesentlichen vertikale Schwenkachse (12') geschwenkt wird, so daß er sich in Längsrichtung in Fahrtrichtung (8) erstreckt.

## Claims

1. Agricultural machine comprising working implements (2) and a device (19) consisting of a guard (20) made of flexible material at least partially surrounding the said working implements (2), and a warning sign (31), ***characterized in*** that the said warning sign (31) forms an integral part of the guard (20).

2. Agricultural machine according to Claim 1, ***characterized in*** that the guard (20) comprises a pocket (35) which has an exterior surface (36), in which a support (33) is housed.

3. Agricultural machine according to Claim 2, ***characterized in*** that the pocket (35) is provided on the exterior part of the guard (20).

4. Agricultural machine according to claim 2 or 3, ***characterized in*** that the pocket (35) has an opening so that the support (33) can be slipped into the pocket (35).

5. Agricultural machine according to Claim 4, ***characterized in*** that the opening of the pocket (35) is at the upper edge (48) thereof.

6. Agricultural machine according to Claim 4 or 5, ***characterized in*** that the opening of the pocket (35) may be closed.

7. Agricultural machine according to any one of Claims 2 to 6, ***characterized in*** that the exterior surface (36) of the pocket (35) is made of the same material as the guard (20).

8. Agricultural machine according to any one of Claims 2 to 6, ***characterized in*** that the exterior surface (36) of the pocket (35) is transparent, an adhesive warning film (34) being stuck onto that face of the support (33) which is visible through the said transparent exterior surface (36).

9. Agricultural machine according to any one of Claims 2 to 7, ***characterized in*** that an adhesive warning film (34) is stuck onto the exterior surface (36) of the pocket (35) at least roughly in the region of the support (33).

10. Agricultural machine comprising working implements (2) and a device (19) consisting of a guard (20) made of flexible material, at least partially surrounding the said working implements (2), and a warning sign (31A), ***characterized in*** that the said warning sign (31A) is fixed to the said guard (20).

11. Agricultural machine according to Claim 10, ***characterized in*** that the warning sign (31 A) includes a support (33A) which has a certain rigidity and an adhesive warning film (34), this support (33A) being connected to the guard (20), while this warning film (34) is stuck onto the support (33A).

12. Agricultural machine according to any one of Claims 8, 9 or 11, ***characterized in*** that there is a protective means (38) intended to protect the adhesive warning film (34) or the transparent exterior surface (36) of the pocket (35).

13. Agricultural machine according to Claim 12, ***characterized in*** that the protective means (38) includes at least one reinforcement (39) projecting in front of the adhesive warning film (34) or the transparent exterior surface (36) of the pocket (35) when the agricultural machine is in the work position.

14. Agricultural machine according to Claim 13, ***characterized in*** that the reinforcement (39) consists of a fold (40) of the exterior surface (36) of the pocket (35).

15. Agricultural machine according to any one of Claims 1 to 14, ***characterized in*** that it is a mower, the working implements (2) of which consist of a harvesting mechanism (9).

16. Agricultural machine according to Claim 15, ***characterized in*** that the harvesting mechanism (9) is pivoted, for transport, about an at least approximately vertical axis of pivoting (12') so that it extends longitudinally in the direction of forward travel (8).
